# EUROPÄISCHE PATENTANMELDUNG

(11) **EP 2 589 844 A1**
(43) Veröffentlichungstag der Anmeldung: **08.05.2013**
(21) Anmeldenummer: 12006116.3
(22) Anmeldetag: 29.08.2012
(51) Int. Cl.: F16L 3/10

(54) **Schelle zum Befestigen von Rohren oder Leitungen**

(30) Priorität: 04.11.2011 DE 102011117696
(71) Anmelder: NORMA Germany GmbH, 63477 Maintal (DE)
(72) Erfinder: Unger, Dennis, 63486 Bruchköbel (DE)
(74) Vertreter: Knoblauch, Andreas

(57) **Zusammenfassung**

Die Erfindung betrifft eine Schelle (1) zum Befestigen von Rohren oder Leitungen, die einen ersten Arm (4) und einen zweiten Arm (5) aufweist, die miteinander verbindbar sind.

Um eine Schelle mit hoher Steifigkeit zu ermöglichen, ist der erste Arm (4) an einer Basis (2) und der zweite Arm (5) an einem Schlitten (3) angeordnet, wobei der Schlitten (3) an der Basis (2) verschiebbar gelagert ist.

## Beschreibung

Die Erfindung betrifft eine Schelle zum Befestigen von Rohren oder Leitungen, die einen ersten Arm und einen zweiten Arm aufweist, die miteinander verbindbar sind.

Derartige Schellen werden beispielsweise eingesetzt, um Rohre oder Leitungssysteme zu befestigen. Dabei wird die Schelle zunächst an einer tragenden Struktur, beispielsweise einer Wand oder einem Rahmen, befestigt und anschließend das Rohr oder die Leitung in die Schelle eingelegt. Die Schelle wird dann durch Verbinden der Arme geschlossen, so dass die Arme das Rohr bzw. die Leitung umgeben.

Um das Rohr bzw. die Leitung in die Schelle einlegen zu können, ist ein relativ weites Öffnen der Schelle erforderlich. Dafür weisen die Arme der Schelle in der Regel eine relativ hohe Elastizität auf, so dass ihre freien Enden, mit denen sie verbunden werden können, relativ weit voneinander weg gebogen werden können. Dies hat jedoch den Nachteil, dass die Schelle insgesamt eine relativ hohe Elastizität aufweist und insbesondere keine starre Verbindung des Rohres bzw. der Leitung erlaubt.

Der Erfindung liegt nun die Aufgabe zugrunde, eine Schelle mit hoher Steifigkeit bereitzustellen.

Diese Aufgabe wird erfindungsgemäß bei einer Schelle der eingangs genannten Art dadurch gelöst, dass der erste Arm an einer Basis und der zweite Arm an einem Schlitten angeordnet ist, wobei der Schlitten an der Basis verschiebbar gelagert ist.

Die gesamte Schelle, also die Arme, die Basis und der Schlitten, können dann relativ starr ausgebildet sein. Eine Verformung der Arme zum Festlegen von Rohren oder Leitungen ist dann nicht erforderlich. Beispielsweise können die Arme aufeinander zu gebogen sein und in miteinander verbundenem Zustand einen kreisförmigen Querschnitt umgeben. Durch Verschieben des Schlittens mit dem zweiten Arm gegenüber der Basis und dem ersten Arm kann die Schelle weit genug geöffnet werden, um ein Rohr oder Leitungselement aufzunehmen. Anschließend werden die Arme durch Verschieben des Schlittens aufeinander zu bewegt und die Schelle geschlossen, wodurch ein starrer Halt der Leitung bzw. des Rohres möglich ist. Insgesamt wird so eine Schelle mit hoher Steifigkeit erhalten. Vorzugsweise weisen die Arme an ihren freien Enden jeweils eine Verbindungsgeometrie auf, mit der insbesondere eine Rastverbindung herstellbar ist. Über die Verbindungsgeometrien ist also eine formschlüssige Verbindung der Arme untereinander möglich. Beispielsweise kann die Verbindungsgeometrie am ersten Arm als Haken und die Verbindungsgeometrie am zweiten Arm als Ausnehmung ausgebildet sein. Der Haken rastet dann in die Ausnehmung ein, sobald die Schelle geschlossen wird. Damit ergibt sich eine sehr stabile, hohe Kräfte aufnehmende formschlüssige Verbindung. Die Ausnehmung kann dabei von einer im Wesentlichen U-förmigen Umrandung umgeben sein, durch die eine Führung des Hakens erfolgt. Dadurch können auch axiale Kräfte von der Verbindungsgeometrie aufgefangen werden. Gleichzeitig wird der Haken durch die Umrandung vor äußeren Kräften geschützt, so dass ein ungewolltes Öffnen oder eine Beschädigung des Hakens durch äußere Krafteinwirkungen unwahrscheinlich ist.

Vorteilhafterweise weist die Basis einen Befestigungsabschnitt auf, der an einem vom ersten Arm abgewandten Ende der Basis angeordnet ist. Der Befestigungsabschnitt dient zum Festlegen der Schelle an einer tragenden Struktur, wie beispielsweise einer Wand, einer Decke oder einem Boden eines Gehäuses oder der Karosserie eines Fahrzeuges oder Flugzeuges. Der Befestigungsabschnitt kann beispielsweise eine Öffnung zur Aufnahme eines Befestigungsmittels, wie z.B. einer Schraube, aufweisen. Damit ist es relativ einfach möglich, die Schelle zu befestigen. Vorzugsweise ist der Schlitten auf einer Führung geführt, die eine Ausnehmung des Schlittens durchdringt. Der Schlitten ist also formschlüssig geführt. Dabei kann die Führung als Verlängerung der Basis ausgebildet sein, die sich parallel zur Basis erstreckt. Die Führung ist beispielsweise als Schwalbenschwanzführung ausgebildet und bewirkt durch ihre Formgebung in Zusammenwirkung mit der Ausnehmung eine Verdrehsicherung. Insgesamt kann damit der Schlitten auf der Führung relativ stabil geführt sein.

Dabei ist besonders bevorzugt, dass eine Unterseite des Schlittens mit einer Unterseite der Basis fluchtend abschließt. Die Unterseite der Basis und des Schlittens kann dann an einer glatten Oberfläche angeordnet werden. Die Befestigung der Schelle ist damit relativ einfach.

Vorzugsweise ist ein Führungsbereich des Schlittens teilweise in einer Ausnehmung in der Basis unterhalb des ersten Armes aufnehmbar. Dadurch erfolgt beim Schieben des Schlittens zur Basis, also beim Verschließen der Schelle, eine zusätzliche formschlüssige Verbindung zwischen dem Schlitten und der Basis. Dadurch ergibt sich eine sehr hohe Steifigkeit der Schelle und gleichzeitig können relativ hohe Kräfte übertragen werden.

Vorzugsweise ist an einer Innenseite der Arme ein Einsatz angeordnet, der ein erstes Material aufweist, wobei die Basis, der Schlitten und die Arme ein zweites Material aufweisen. Die beiden Materialien gehen dabei insbesondere eine chemische Haftverbindung miteinander ein. Der Einsatz liegt bei montierter Schelle zwischen den Armen und dem Rohr bzw. der Leitung. Dabei kann der Einsatz dann beispielsweise eine gewisse Elastizität aufweisen und damit eine Schwingungsentkopplung bewirken, während das zweite Material der Basis, des Schlittens und der Arme relativ steif und unnachgiebig ist. Durch geringe elastische Verformung des ersten Materials des Einsatzes beim Verschließen der Schelle um ein Rohr oder Leitungselement kann dabei auch ein sehr fester Halt des Rohrs oder Leitungselements erreicht werden, da durch die Verformung des ersten Materials eine Vorspannung bewirkt wird. Es ergibt sich damit ein spielfreier Halt.

Vorzugsweise weist das erste Material ein Silikon, insbesondere ein Flüssigsilikon, und das zweite Material ein Thermoplast auf. Durch den Einsatz von Thermoplast kann die Schelle, also die Basis, der Schlitten und die Arme, mit relativ hoher Steifigkeit ausgebildet sein. Die Verwendung von Silikon ermöglicht eine Vibrationsdämpfung bzw. eine Entkopplung des Umfelds von Vibrationen und damit einen sicheren Sitz des Rohrs oder Leitungselements in der Schelle. Flüssigsilikon kann dabei beispielsweise in flüssigem Zustand aufgebracht bzw. aufgespritzt werden, so dass das Silikon eine innige Verbindung mit dem Thermoplast eingehen kann. Damit ergibt sich ein sehr sicherer Halt des Einsatzes an der Innenseite der Arme.

Vorzugsweise ist die Schelle in einem Temperaturbereich von - 55°C bis + 260°C einsetzbar. Damit ergeben sich sehr weite Anwendungsgebiete beispielsweise in Flugzeugen. Bei der Verwendung von Thermoplast und Silikon ist ein derartiger Temperaturbereich realisierbar.

Dabei ist besonders bevorzugt, dass die Materialien der Schelle kraftstoffbeständig sind. Die Schelle kann dann auch in chemischen Anlagen oder beispielsweise zur Fixierung von Kraftstoffleitungen eingesetzt werden. Sowohl Thermoplast als auch Silikon sind dabei kraftstoffbeständige Materialien.

Die Erfindung wird im Folgenden anhand eines bevorzugten Ausführungsbeispiels in Verbindung mit der Zeichnung näher beschrieben. Hierin zeigen:
- Fig. 1: eine Schelle in geöffnetem Zustand und
- Fig. 2: eine Schelle in geschlossenem Zustand.

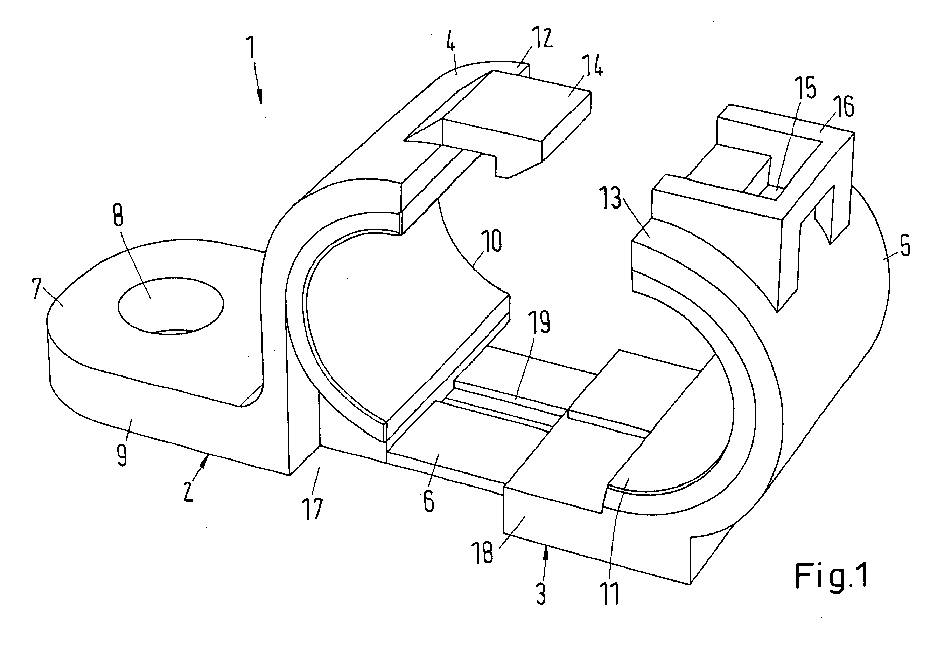

In Fig. 1 ist die Schelle, die als Befestigungsschelle für Rohre oder Leitungen eingesetzt werden kann, in dreidimensionaler Darstellung gezeigt. Die Schelle 1 weist dabei eine Basis 2, einen Schlitten 3, einen ersten Arm 4 und einen zweiten Arm 5 auf. Der Schlitten 3 ist dabei auf einer Führung 6 linear geführt, die einstückig mit der Basis 2 ausgebildet ist. Dabei durchsetzt die Führung 6 eine Ausnehmung des Schlittens 3. Die Führung 6 ist dabei mit einem im Wesentlichen rechteckigen Querschnitt ausgebildet, wobei die Ausnehmung einen entsprechenden Querschnitt aufweist, so dass neben einer linearen Führung auch eine Verdrehsicherung erfolgt. Dies wird zusätzlich durch einen Steg 19 verbessert, der an einer Oberseite der Führung 6 ausgebildet ist.

Die Basis 2 weist einen Befestigungsabschnitt 7 auf, der eine Öffnung 8 zur Aufnahme eines Befestigungsmittels aufweist. Mit einem Befestigungsmittel, beispielsweise einer Schraube oder einem Niet, kann die Schelle 1 an einer Karosserie oder einem anderen stationären Element befestigt werden. Dabei wird die Schelle 1 mit einer Unterseite 9 des Befestigungsabschnitts 7 an das entsprechende Element angelegt und mit Hilfe des Befestigungsmittels, das durch die Öffnung 8 geführt wird, befestigt.

Der erste Arm 4 ist einstückig mit der Basis 2 und der zweite Arm 5 einstückig mit dem Schlitten 3 ausgebildet. Die Basis 2 mit der Führung 6 und dem ersten Arm 4 sowie der Schlitten 3 mit dem zweiten Arm 5 sind aus einem zweiten Material, in diesem Fall einem Thermoplast, hergestellt. An einer Innenseite des ersten Arms 4 und des zweiten Arms 5 ist ein zweiteiliger Einsatz 10, 11 angeordnet. Dieser Einsatz deckt jeweils die Innenseite des ersten Arms 4 bzw. des zweiten Arms 5 vollständig ab und ist wie die Arme 4, 5 halbkreisförmig ausgebildet. Der Einsatz 10, 11 ist aus einem ersten Material hergestellt, das vom zweiten Material verschieden ist.

Der Einsatz 10, 11 weist bei diesem Beispiel ein Silikon auf, das auf die Innenseite der Arme 4, 5 aufgespritzt worden ist.

An freien Enden 12, 13 der Arme 4, 5 ist jeweils eine Verbindungsgeometrie 14, 15 ausgebildet, wobei die Verbindungsgeometrie 14 am ersten Arm 4 als Haken und die Verbindungsgeometrie 15 am zweiten Arm 5 als Ausnehmung ausgebildet ist. Die Verbindungsgeometrie 15 ist dabei von einer U-förmigen Umrandung 16 umgeben, die die hakenförmige Verbindungsgeometrie 14 nach Einrasten in die Ausnehmung der Verbindungsgeometrie 15 umgibt. Dabei schließt eine obere Kante der Umrandung 16 mit einer Oberseite der Verbindungsgeometrie 14 ab, so dass die Verbindungsgeometrie 14 vor äußeren Kräften, die ein Lösen der Verbindungsgeometrien 14, 15 bewirken könnten, relativ gut geschützt ist.

Die hakenförmige Verbindungsgeometrie 14 ist dabei einstückig mit dem ersten Arm 4 ausgebildet. Die Umrandung 16 ist einstückig mit dem zweiten Arm 5 ausgebildet.

Unterhalb des ersten Arms 4 weist die Basis 2 eine Ausnehmung 17 auf, in die ein Führungsbereich 18 des Schlittens 3 beim Schließen der Schelle 1 eingeschoben wird. Dabei ergibt sich eine relativ großflächige Verbindung zwischen dem Schlitten 3 und der Basis 2, so dass eine hohe Steifigkeit der Schelle 1 erhalten wird.

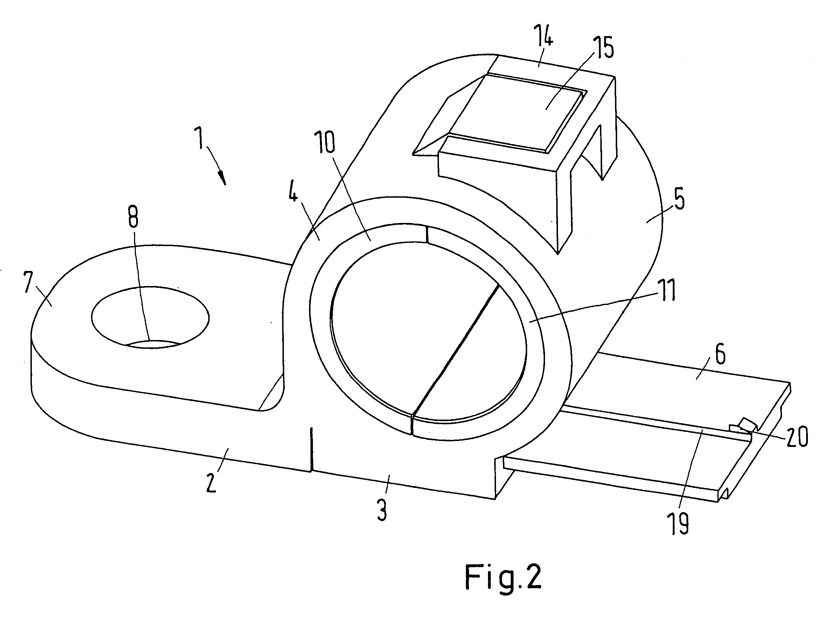

In Fig. 2 ist nun die Schelle nach Fig. 1 in geschlossenem Zustand gezeigt. Der Schlitten 3 ist gegen die Basis 2 verschoben worden, so dass die freien Enden 12, 13 der Arme 4, 5 aneinander angelegt worden sind und die Verbindungsgeometrien 14, 15 miteinander verrastet sind. Die Arme 4, 5 umgeben dann einen kreisförmigen, geschlossenen Querschnitt, in dem ein Rohr oder Leitungselement gehalten werden kann, das zuvor im offenen Zustand der Schelle 1 zwischen die Arme 4, 5 eingelegt worden ist.

Eine Unterseite des Schlittens 3 verläuft fluchtend mit der Unterseite 9 der Basis 2. Die Schelle 1 kann damit problemlos an glatten Flächen befestigt werden, wobei gleichzeitig eine Kraftübertragung vom Schlitten 3 auf die glatte Fläche möglich ist, so dass sich insgesamt eine sehr steife Anordnung ergibt.

An einem Ende des Steges 19 kann ein Anschlag 20 vorgesehen sein, der als Verliersicherung dient. Der Schlitten 3 kann dann nicht ohne weiteres über den Anschlag 20 hinaus von der Basis 2 weg bewegt werden. Die maximale Öffnungsweite der Schelle 1 wird damit vorgegeben.

Insbesondere durch die Verwendung von Thermoplast als Material für die Basis mit dem ersten Arm und der Führung sowie für den Schlitten mit dem zweiten Arm und durch Silikon für den Einsatz ergibt sich eine sehr leichte Schelle mit hoher Steifigkeit, die ein einfaches Fixieren von Rohr - und/oder Leitungssystemen ohne zusätzliche Kabelbinder oder zusätzliches Werkzeug ermöglicht. Dabei kann die Schelle zuerst montiert werden und das Rohr bzw. Leitungselement erst nachträglich in die Schelle eingelegt werden. Durch einfaches Verschieben des zweiten Arms mit dem Schlitten gegenüber der Basis erfolgt dann ein einfaches Verschließen der Schelle mit einem automatischen Verrasten der Verbindungsgeometrien, wobei ein selbständiges Öffnen der Schelle ausgeschlossen ist. Durch den Einsatz aus Silikon wird eine Vibrationsübertragung vom Rohr- bzw. Leitungssystem auf das Umfeld verhindert, womit ein sicherer Sitz des Rohrs bzw. Leitungselements sichergestellt ist. Dabei kann die Schelle auch unter extremen Bedingungen, wie beispielsweise in der Luftfahrtindustrie oder Automobilindustrie, eingesetzt werden. Die Verwendung von Thermoplast und Silikon erlaubt den Einsatz der Schelle in einem Temperaturbereich von - 55°C bis + 260°C bei gleichzeitiger Kraftstoffbeständigkeit, wobei die Schelle eine hohe Steifigkeit und ein geringes Gewicht aufweist. Je nach Anforderungsbedingungen kann die Schelle auch aus einem anderen Material hergestellt werden, so dass beispielsweise eine kostengünstige Herstellung der Schelle möglich wird.

## Patentansprüche

1. Schelle zum Befestigen von Rohren oder Leitungen, die einen ersten Arm und einen zweiten Arm aufweist, die miteinander verbindbar sind, **dadurch gekennzeichnet, dass** der erste Arm (4) an einer Basis (2) und der zweite Arm (5) an einem Schlitten (3) angeordnet ist, wobei der Schlitten (3) an der Basis (2) verschiebbar gelagert ist.

2. Schelle nach Anspruch 1, **dadurch gekennzeichnet, dass** die Arme (4, 5) an ihren freien Enden (12, 13) jeweils eine Verbindungsgeometrie (14, 15) aufweisen, mit der insbesondere eine Rastverbindung herstellbar ist.

3. Schelle nach einem der Ansprüche 1 oder 2, **dadurch gekennzeichnet, dass** die Basis (2) einen Befestigungsabschnitt (7) aufweist, der an einem vom ersten Arm (4) abgewandten Ende der Basis (2) angeordnet ist.

4. Schelle nach einem der Ansprüche 1 bis 3, **dadurch gekennzeichnet, dass** der Schlitten (3) auf einer Führung (6) geführt ist, die eine Ausnehmung des Schlittens (3) durchdringt.

5. Schelle nach einem der Ansprüche 1 bis 4, **dadurch gekennzeichnet, dass** eine Unterseite des Schlittens (3) mit einer Unterseite (9) der Basis (2) fluchtend abschließt.

6. Schelle nach einem der Ansprüche 1 bis 5, **dadurch gekennzeichnet, dass** ein Führungsbereich (18) des Schlittens (3) teilweise in einer Ausnehmung (17) der Basis (2) unterhalb des ersten Arms (4) aufnehmbar ist.

7. Schelle nach einem der Ansprüche 1 bis 6, **dadurch gekennzeichnet, dass** an einer Innenseite der Arme (4, 5) ein Einsatz (10, 11) angeordnet ist, der ein erstes Material aufweist, wobei die Basis (2), der Schlitten (3) und die Arme (4, 5) ein zweites Material aufweisen.

8. Schelle nach Anspruch 7, **dadurch gekennzeichnet, dass** das erste Material ein Silikon, insbesondere ein Flüssigsilikon, und das zweite Material ein Thermoplast aufweist.

9. Schelle nach einem der Ansprüche 1 bis 8, **dadurch gekennzeichnet, dass** die Schelle (1) in einem Temperaturbereich von - 55°C bis + 260°C einsetzbar ist.

10. Schelle nach einem der Ansprüche 1 bis 9, **dadurch gekennzeichnet, dass** die Materialien der Schelle kraftstoffbeständig sind.
